# EUROPEAN PATENT SPECIFICATION

(11) **EP 2 193 648 B1**
(45) Date of publication and mention of the grant of the patent: **31.08.2011**
(21) Application number: 07800662.4
(22) Date of filing: 25.09.2007
(51) Int. Cl.: H04L 29/08

(54) **SYSTEM AND METHOD FOR PROVIDING NAVIGATIONAL INFORMATION**
SYSTEM UND VERFAHREN ZUR BEREITSTELLUNG VON NAVIGATIONSINFORMATIONEN
SYSTÈME ET PROCÉDÉ DE FOURNITURE D' INFORMATIONS DE NAVIGATION

(43) Date of publication of application: 09.06.2010
(73) Proprietor: Route 66 Switzerland Gmbh, 8808 Pfäffikon (CH)
(72) Inventor: ANTONENCO, Mihai, Bucuresti (RO); STRAUB, Bernhard, 76135 Karlsruhe (DE)
(74) Representative: Rentsch Partner AG
(86) International application number: PCT/CH2007/000471
(87) International publication number: WO 2009/039669

(56) References cited:
- WO-A-99/07125
- US-B1- 6 169 897
- US-B1- 6 336 073

## Description

### Field of the Invention

The present invention relates to a system and a method for providing navigational information to a user of a mobile device. Specifically, the present invention relates to a system and a method for providing navigational information to a user of a mobile communication terminal using a browser to access through a transfer protocol, e.g. the Hypertext Transfer Protocol (HTTP), a remote computerized LBS server providing location based services (LBS).

### Background of the Invention

A particularly useful utilization of mobile devices in combination with the Internet is providing to the mobile user location-specific information while he is traveling. Thus, using mobile devices, i.e. communication terminals configured to access the Internet via a mobile radio network, such as a GSM-network (Global System for Mobile Communication), a UMTS-network (Universal Mobile Telephone System) or another mobile radio telephone system, or a wireless local area network (WLAN), mobile users can access and receive location based services (LBS). Generally, LBS servers receive from mobile users geo-coded location data representative of a location X, e.g. in the form of an address, postal code, coordinates (WGS84 coordinates), and/or a category. Subsequently, the LBS server provides the mobile LBS user with one or more points of interest (POI) located in the vicinity of that location X. The location based services data provided by conventional LBS servers is limited, however, to the geographic location and other descriptive information about points of interest, such as hotels, restaurants, business listings, holiday resorts, etc. As most publishers of location based services data are interested in persuading mobile LBS users to visit their establishments, it would be advantageous to provide to the users not only the location of points of interest but also navigational information for navigating the user to a selected point of interest. Document US6336073B1 discloses triggering navigation functionalities for the points of interest in the mobile phone through a processor. Document US6169897B1 discloses providing by URL server a list of URLs for local points of interest to the mobile terminal. The list can then be used to access further information concerning the points of interest stored on a local information server in a communications network. Document WO99/07125A discloses broadcasting by local agents URLs to the mobile information terminals. The URLs can further be used by the user of the terminal to access WWW servers on the Internet.

### Summary of the Invention

It is an object of this invention to provide a new system and a new method for delivering navigational information to a user of a mobile device. In particular, it is an object of the present invention to provide a system and a method for delivering the navigational information to the mobile user based on location based services data provided by a LBS server.

According to the present invention, these objects are achieved particularly through the features of the independent claims. In addition, further advantageous embodiments follow from the dependent claims and the description.

The mobile user uses a browser of the mobile device to access through a transfer protocol, e.g. the Hypertext Transfer Protocol (HTTP) via a mobile radio network, a remote computerized LBS (location based services) server providing location based services (data).

According to the present invention, the above-mentioned objects are particularly achieved in that, in addition to geographical positions of points of interest, the location based services data, received in the browser from the LBS server, includes navigation command codes and at least one resource locator, e.g. a Uniform Resource Locator (URL), associated with a local transfer protocol server located in the mobile device, e.g. a resident HTTP server. Instructions are received in the browser from the user for determining a selected one of the points of interest and a selected one of the navigation command codes. Preferably, in the location based services data, the LBS server transmits to the browser web page definition code enabling the browser to receive from the user the instructions for selecting the selected one of the points of interest and the selected one of the navigation command codes. The local transfer protocol server is accessed from the browser by using the resource locator in association with the selected one of the points of interest and the selected one of the navigation command codes. In response to the resource locator received in the transfer protocol server from the browser, a navigation function is executed in the mobile device. The navigation function is defined by the selected one of the navigation command codes, and provides to the user navigational information related to the geographical position of the selected one of the points of interest. For example, the navigation function provides to the user navigational information navigating the user from the current position of the mobile device to the geographical position of the selected one of the points of interest.

By implementing a local transfer protocol server in the mobile device and by extending the LBS server to include in the location based services data navigation command codes and a resource locator associated with the local transfer protocol server, it is possible to extend the functionality of the LBS server with navigation functionality at the mobile device, with only minor changes at the LBS server. Moreover, if a mobile device is used that has an inherent navigation engine, e.g. a mobile navigation device, it is possible to provide navigation functionality to the location based services data received from the LBS server, by merely implementing the resident transfer protocol server in the mobile device in addition to the changes at the LBS server.

In an embodiment, the location based services data received in the browser includes navigation command resource locators, whereby each navigation command resource locator is a resource locator associated with the local transfer protocol server located in the mobile device, a geographical position of a point of interest and/or a navigation command code. In the browser, instructions are received from the user for selecting a selected one of the navigation command resource locators. Preferably, in the location based services data, the LBS server transmits to the browser web page definition code enabling the browser to receive from the user the instructions for selecting the selected one of the navigation command resource locators. Subsequently, the local transfer protocol server located in the mobile device is accessed by using the selected navigation command resource locator.

In an alternative embodiment, a navigation command resource locator is generated in the browser from the resource locator associated with the local transfer protocol server, the geographical position of the selected one of the points of interest and the selected one of the navigation command codes. Preferably, in the location based services data, the LBS server transmits to the browser web page definition code, enabling the browser to generate the navigation command resource locator, e.g. by means of a Java applet. Subsequently, the local transfer protocol server located in the mobile device is accessed by using the generated navigation command resource locator.

In a preferred embodiment, the current geographical position of the mobile device is transmitted from the mobile device to the remote LBS server. The LBS server determines and includes in the location based services data points of interests having geographical positions within a defined distance from the current geographical position of the mobile device.

In addition to a system and a method for providing navigational information to a user of a mobile device, the present invention also relates to a first computer program product including computer program code means for controlling one or more processors of an LBS server which provides location based services, and a second computer program product including computer program code means for controlling one or more processors of a mobile communication terminal. Particularly, the computer program products include a computer readable medium containing therein the computer program code means.

The first computer program product comprises computer program code means for controlling the processors of the LBS server, such that the LBS server stores web page definition code including geographical positions of points of interest, navigation command codes, and at least one resource locator for accessing a transfer protocol server located in the mobile communication terminals. The web page definition code enables the browser to receive from a user instructions for selecting a selected one of the points of interest and a selected one of the navigation command codes. Furthermore, the LBS server receives requests for location based services from the browsers of the remote mobile devices and transmits to the mobile communication terminals, responsive to the requests, location based services data including the web page definition code with at least one of the geographical positions of points of interest, at least one of the navigation command codes, and the resource locator.

The second computer program product comprises computer program code means for controlling the processors of the mobile communication terminal, such that the mobile communication terminal implements a local transfer protocol server, and requests and receives through a transfer protocol from a remote computerized LBS server location based services data including geographical positions of points of interest, navigation command codes, at least one resource locator for accessing the local transfer protocol server located in the mobile communication terminal, and web page definition code enabling a browser of the mobile communication terminal to receive from a user instructions for selecting a selected one of the points of interest and a selected one of the navigation command codes. Furthermore the mobile device executes navigation functions in response to the resource locator received in the transfer protocol server from the browser, a navigation function being defined by the selected one of the navigation command codes, received in the transfer protocol server in connection with the resource locator, and providing to the user navigational information related to the geographical position of the selected one of the points of interest, received in the transfer protocol server in connection with the resource locator.

### Brief Description of the Drawings

The present invention will be explained in more detail, by way of example, with reference to the drawings in which:
Figure 1 shows a block diagram illustrating schematically a system for providing location based services (LBS) according to the prior art whereby a mobile device retrieves location based services data from an LBS server via a transfer protocol.
Figure 2 shows a block diagram illustrating schematically an exemplary configuration of a system for practicing embodiments of the present invention, said configuration comprising a mobile device configured to retrieve location based services data with navigational information from a computerized LBS server.
Figure 3 shows a flow diagram illustrating an example of a sequence of steps executed according to the present invention for providing navigation information to a user of a mobile device.
Figure 4 shows a flow diagram illustrating an example of a sequence of steps executed according to the present invention for providing navigation functionality to a user of a mobile device.
Figure 5 shows a flow diagram illustrating an example of a sequence of steps executed according to the present invention for providing navigation information related to nearby objects.
Figure 6 shows a flow diagram illustrating an example of a sequence of steps executed according to the present invention for providing navigation functionality related to nearby objects.

### Detailed Description of the Preferred Embodiments

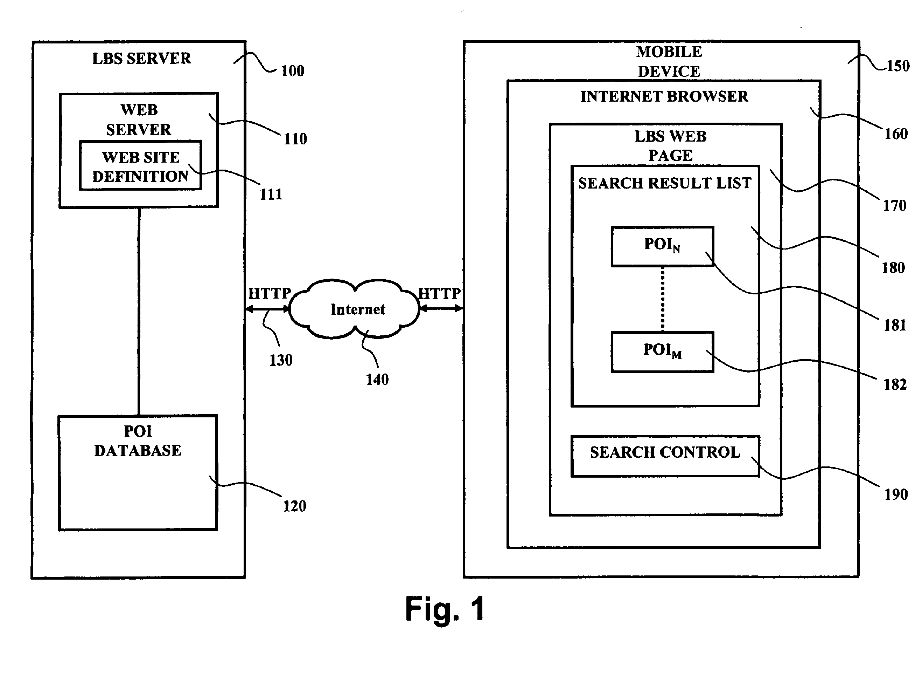

As illustrated in Figure 1, the publisher of a point of interest (POI) database 120 maintains a computerized LBS Server 100, comprising a web server 110 with the web site layout/functionality definition 111 and a POI database 120 back end.

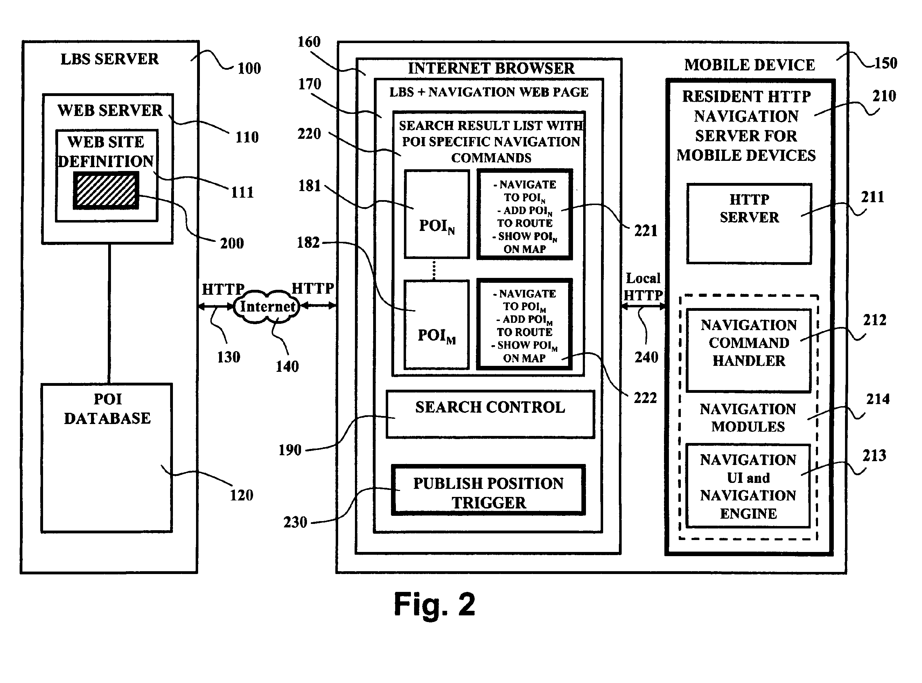

In Figures 1 and 2, reference numeral 150 refers to a mobile device, e.g. a mobile communication terminal, such as a mobile radio telephone, a navigation device, a PDA (personal digital assistant) or laptop computer, having a communication module for communicating with the remote LBS Server 100 using a transfer protocol 130 such as HTTP via the Internet 140 through a mobile radio network such as a GSM-network, a UMTS-network or another mobile radio telephone system, or a WLAN.

The mobile device 150 comprises an Internet browser 160 enabling the user of the mobile device 150 to connect to the LBS web site of the LBS server 100 via Internet 140 using the transfer protocol 130 (HTTP).

The typical LBS web page 170 provided by the web server 110 features search controls 190 which make it possible for the mobile LBS user to specify criteria for searching for one or more specific POls. Typical search criteria are address, postcode, and category. The LBS server 100 retrieves the relevant POI from the POI database 120 and lists them in a search result list 180 for the mobile device 150. Typically, POI-specific URLs accompany each list entry 181, 182 for guiding the mobile LBS user to in-depth information about that POI.

As illustrated in Figure 2, according to the present invention, the prior art system of Figure 1 is extended for providing navigation information to the user of the mobile device 150. First, the mobile device 150 is extended with a local navigation server 210 that runs as a local transfer protocol server 211 on the mobile device 150, particularly a resident HTTP navigation server that runs as an HTTP server. Second, the web site definition 111 of the web server 110 is provided with extended web page definition code 200 including navigation command URLs 221, 222 (shown in Figure 2 after retrieval from the LBS server 100, as part of the search list 220). The navigation command URLs refer to (address) the transfer server 211 located in the mobile device 150, and include a navigation command code associated with a specific navigation command. In an alternative embodiment, the extended web page definition code 200 is configured to enable the Internet browser 160 to generate the navigation command URLs from a URL, referring to (addressing) the local transfer protocol server 211, and from navigation command codes kept separate from this URL. Each of the navigation command URLs addresses the local navigation server 210 via the local transfer protocol 240 (HTTP) to execute a specific navigation command.

In addition to the local transfer protocol server 211, the local navigation server 210 comprises navigation modules 214, preferably implemented as programmed software modules, which include a navigation command handler 212 and a navigation engine 213 with a navigation user interface (UI). The navigation command handler 212 is configured to parse and respond to navigation commands URLs received in the transfer protocol server 211 from the Internet browser 160. After being launched and/or activated by one of the navigation commands, the navigation engine 213 provides to the mobile LBS user the navigation functionality corresponding to that respective command. Navigation commands trigger navigation related functions, such as "navigate to position", "add position to route" or "show position on map".

The nearby search functionality (e.g. "find POIs nearby my current position") is enabled, for example, by adding a publish position trigger element 230 to the extended web page definition code 200 (shown in Figure 2 after access to the LBS server 100, as part of the navigation web page 170).

The publish position trigger element 230 facilitates a publishing mechanism for making known to the LBS Server 100 the mobile device's current position, e.g. the current geographical coordinates. For example, the current position is determined by a GPS receiver (Global Positioning System) internal to the mobile device 150 or connected to the mobile device, e.g. through Bluetooth.

The publish position trigger element is a URL embedded into the LBS web page 170. The above information is interchanged between LBS Server 100 and mobile device 160 as follows.

The position trigger element URL 230 retrieves an IMAGE type resource, e.g. in GIF (Graphics Interchange Format) format, from the transfer protocol server 211. By using an IMAGE type resource a request to the transfer protocol server 211 is generated without requiring any user interaction, hence the term trigger.

In the arguments of position trigger element URL 230, the specific LBS Server address A, and a user session identifier B are transmitted to the transfer protocol server 211. A and B are now known on the mobile device 160.

With this information, the local transfer protocol server 211 can now publish the current GPS coordinate (X, Y) of the device in use by the user identified by session identifier B to LBS server A. This is achieved by issuing a request to LBS server having address A, thereby transmitting the user session identifier B and the coordinate (X, Y).

With this information on the LBS Server 100 a list of current mobile device users (accessing the Web pages 170 maintained by the LBS Server 100) with their positions can be maintained, facilitating the nearby search functionality for each of those users individually.

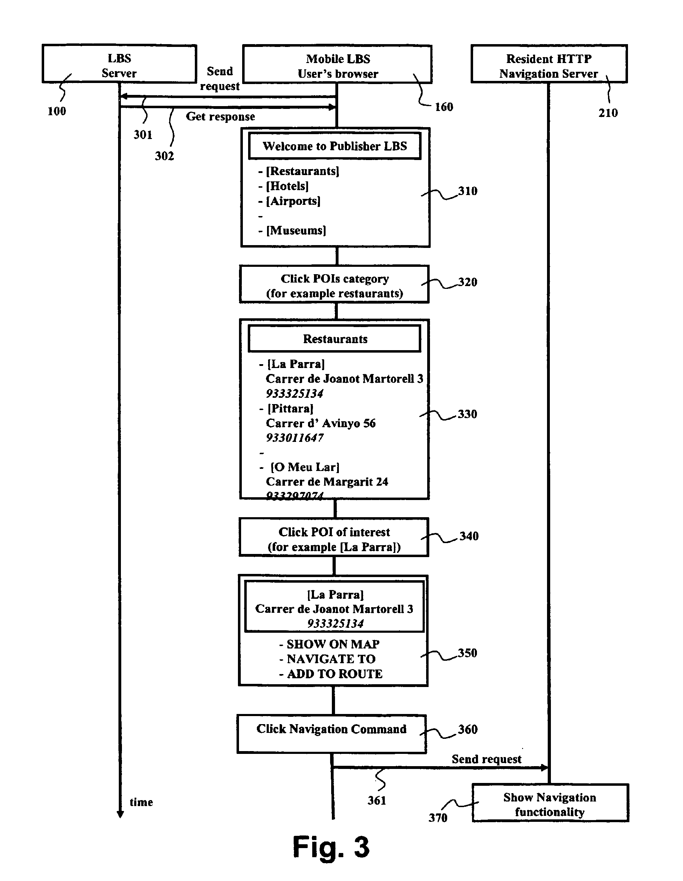

In the following paragraphs, with reference to Figures 3, 4, 5 and 6, described are exemplary sequences of steps for providing the user of the mobile device 150 with navigational information.

The mobile LBS user enters in the location bar of his/her Internet browser 160 an URL for requesting, in step 301, a LBS web page from the LBS Server 100. The publisher of LBS web page owns structured LBS content, consisting of POIs categories, e.g. restaurants, hotels, etc. In step 302, responsive to the request of step 301 the LBS Server 100 responds to the mobile LBS user via transfer protocol 130 (HTTP). Based on this response, in the mobile LBS user's Internet browser 150, an easy to identify LBS web page with POIs categories is provided in layout 310. The mobile LBS user chooses the POI category of his/her interest, e.g. by clicking "restaurants" in step 320.

Optionally, the mobile LBS user can impose search criteria in the LBS web page (not shown in the flow diagram of Figure 3). When a search for specific restaurants is performed, a new request/response is addressed/provided to/by LBS Server 100, and the mobile LBS user receives the POI(s) category filtered according to his/her wishes. In the example illustrated in the flow diagram of Figure 3, in step 330, restaurants located at a defined distance from the mobile device's current geographical position (coordinates) are outlined.

From the list of restaurants shown in step 330, e.g. "La Parra", "Pittara", etc., in step 340, the mobile LBS user clicks the POI that he is interested in, for example the restaurant "La Parra". This POI or any other potential POI is accompanied by a short description including street, phone number, city, zip code, URL and/or category, according to what the LBS publisher provides. In this way, after clicking the desired POI in step 340, the mobile LBS user is empowered with navigation capabilities, as represented in layout 350. This means that the mobile LBS user has the possibility to activate navigation related functions such as: "navigate to position", "add position to route" or "show position on map", the position referring to the location of the POI item selected by the user.

The navigation related functions are provided when navigation command URLs are embedded in the LBS web page layout or generated in the Internet browser 160 by extended web page definition code 200, respectively. To perform navigation related functions, in step 360, the mobile LBS user clicks one of the navigation commands shown in layout 350. The local navigation server 210 processes the navigation command and provides the navigational information and functionality in step 370.

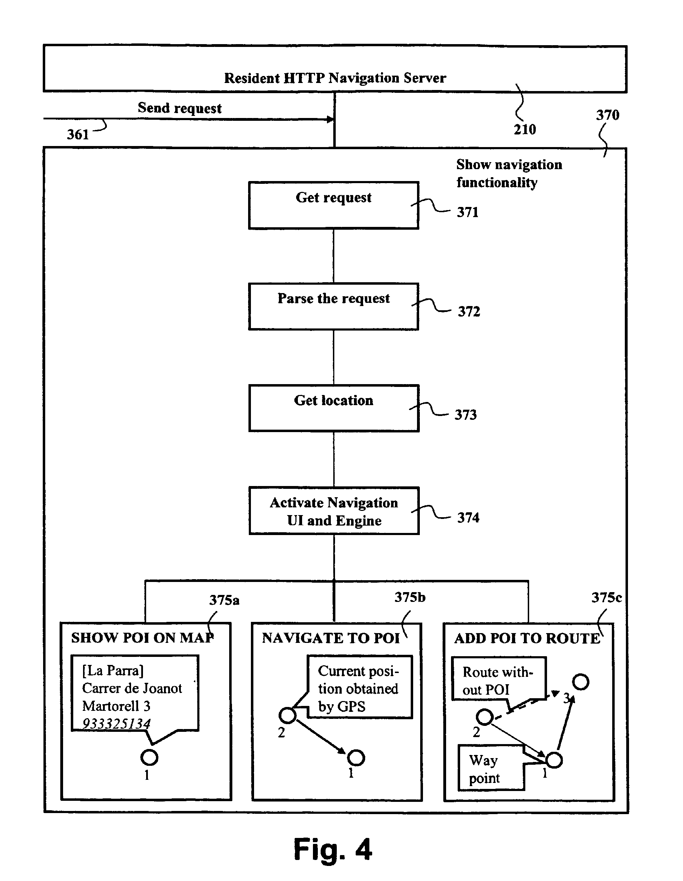

Figure 4 illustrates an exemplary succession of events that occur in the local navigation server 210 when the mobile LBS user performs a request for a navigation related function.

In step 361, the navigation related function is send via local transfer protocol 240 (HTTP) to the local transfer protocol server 211 (resident HTTP server) of the local navigation server 210.

Block 370 for showing the navigation functionality includes a succession of blocks responsible for providing the navigational information and functionality to the mobile LBS user.

In step 371, the transfer protocol server 211 gets the request in the form of a navigation command URL. In step 372, it parses the request, and, in step 373, identifies the parameters of the request in order to get the selected location. Based on the selected location, the navigation command handler 212 activates navigation related function, which parses the navigation command on the navigation UI and navigation engine 213. In step 374, the navigation UI and navigation engine are launched and/or activated, and navigation related functions are performed according to steps 375a, 375b, or 375c, respectively, based on the navigation command selected by the mobile LBS user.

At step 375a, when the mobile LBS user clicks the command "show on map", a map with the selected POI is displayed, e.g. a map wherein the restaurant "La Parra" is marked by 1 and described in the rectangular callout from flow diagram of Figure 4.

At step 375b, when the mobile LBS user clicks the command "navigate to", a route is displayed in the application (local navigation server side), wherein the route has as the departure point the actual position obtained by GPS, marked by 2, and as the destination point the selected restaurant, "La Parra", marked by 1, as shown in the flow diagram of Figure 4.

At step 375c, when the mobile LBS user clicks the command "add to route", the actual POI, i.e. "La Parra" restaurant, becomes a waypoint for the selected route (marked by dotted line arrow between 2 and 3). The new route adds point 1 and includes point 2 as departure, point 3 as destination and point 1 as waypoint to be added to the route, as indicated in the flow diagram of Figure 4.

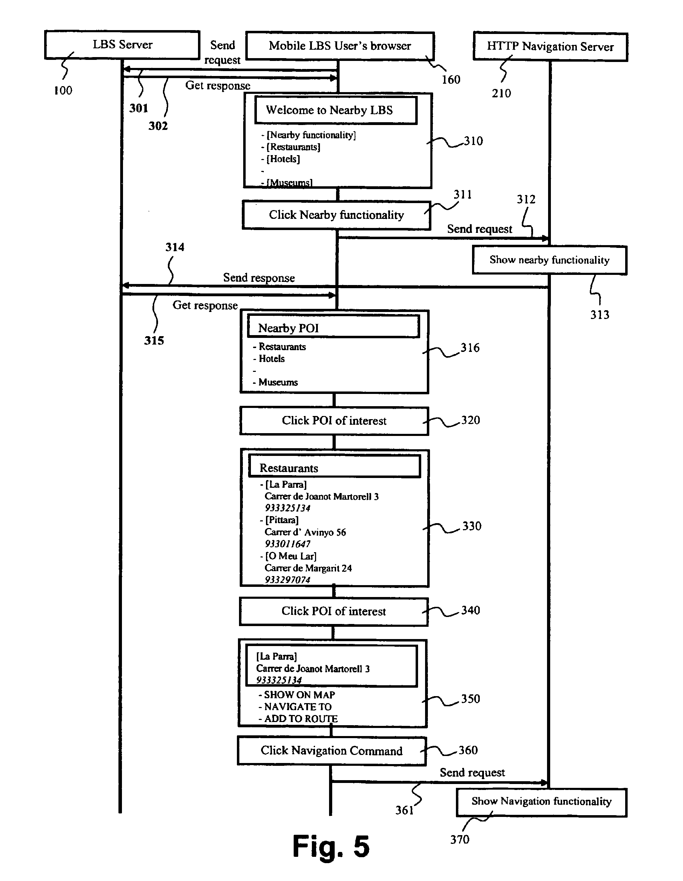

The flow diagram shown in Figure 5 is an extension of the flow diagram of Figure 3, providing nearby functionality to the mobile LBS user at the local navigation server 210. The description is limited to events and diagram blocks that have not been described in the context of Figure 3.

In the LBS web page layout 310, there is additionally provided an item for nearby functionality which is selectable and clickable by the mobile LBS user. The nearby functionality provides to the mobile LBS user the possibility to explore the POI(s), which are located around him/her, i.e. POI located within a defined distance of the current position. After clicking the nearby functionality in step 311, a request is send in step 312 to the local navigation server 210, which performs block 313 for showing the nearby functionality. Basically, the current position of the mobile LBS user is sent in step 314 to the LBS Server 100. In step 315, the LBS server 100 provides via HTTP a layout web page 316 to the mobile LBS user's Internet browser 160. In the web page layout 316, the mobile LBS user has the possibility to visualize the POIs categories and click for POI category of interest (step 320).

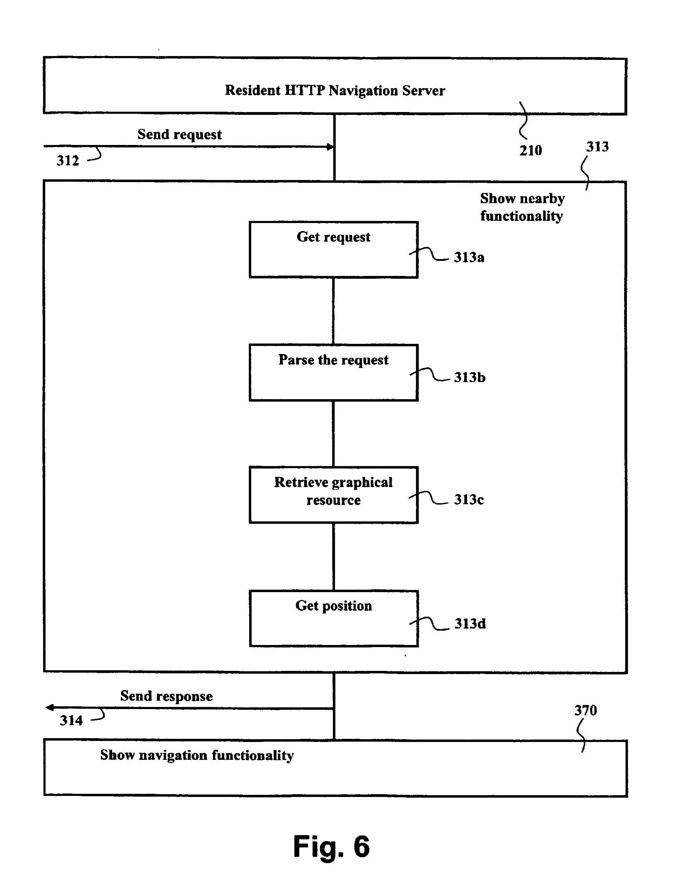

Figure 6 illustrates an exemplary succession of events that occur in the local navigation server 210 when the mobile LBS user performs a request for a navigation function with nearby functionality. The flow diagram shown in Figure 6 is an extension of the flow diagram of Figure 5, providing nearby functionality to the mobile LBS user at the local navigation server 210 side.

The nearby functionality is enabled when the publish position trigger element 230 is added in the extended web page definition code 200.

The sequence of events is described in the case when the mobile LBS user does not know his location and performs nearby search. The mechanism to obtain the current GPS position of the mobile LBS user is provided as described below.

Processing of the request from step 312 in the local navigation server 210 is shown in block 313 for showing the nearby functionality. Upon the mobile LBS user clicking "find POIs nearby my current position"

The request (312) means that when the mobile LBS user clicks the "nearby functionality", an URL is addressed to local transfer protocol server 211 of the local navigation server 210 via the local transfer protocol 240 (HTTP).

In step 313a, the local transfer protocol server 211 gets the request in the form of the publish position trigger element 230, containing a graphical resource, e.g. GIF. In the arguments of the URL associated with publish position trigger element 230, the specific LBS Server address A, and the user session identifier B are included.

It parses the request in step 313b, then retrieves the graphical resource in step 313c, and finally gets the position of the mobile LBS user in step 313d.

In step 314, the local transfer protocol server 211 sends a response to LBS Server 100, publishing to the specific LBS Server having address A the current GPS position of the specific user identified by session identifier B. With this information on the LBS Server 100 a list of current mobile device users (accessing the Web pages 170 maintained by the LBS Server 100) with their positions can be maintained, facilitating the nearby search functionality for each of those users individually.

## Claims

1. A method of providing navigational information to a user of a mobile device (150), the method comprising:
using a browser (160) of the mobile device (150) to access through a transfer protocol a remote computerized LBS server (100) which provides location based services;
receiving in the browser (160) location based services data from the LBS server (100), the location based services data including geographical positions of points of interest, navigation command codes, and at least one resource locator associated with a local transfer protocol server (211) located in the mobile device (150);
receiving in the browser (160) instructions from the user for determining a selected one of the points of interest and a selected one of the navigation command codes;
accessing the local transfer protocol server (211) from the browser (160) by using the resource locator in association with the selected one of the points of interest and the selected one of the navigation command codes; and
executing a navigation function in the mobile device (150), in response to the resource locator received in the transfer protocol server (211) from the browser (160), the navigation function being defined by the selected one of the navigation command codes, and providing to the user navigational information related to the geographical position of the selected one of the points of interest.

2. The method of claim 1, wherein the location based services data received in the browser (160) includes navigation command resource locators, each navigation command resource locator being a resource locator associated with the local transfer protocol server (211) and at least one of a geographical position of a point of interest and a navigation command code; the instructions are received from the user for selecting a selected one of the navigation command resource locators; and the local transfer protocol server (211) is accessed by using the selected navigation command resource locator.

3. The method of claim 1, wherein the method further comprises generating in the browser (160) a navigation command resource locator from the resource locator associated with the local transfer protocol server (211), the geographical position of the selected one of the points of interest and the selected one of the navigation command codes; and accessing the local transfer protocol server (211) by using the navigation command resource locator.

4. The method of one of claims 1 to 3, wherein the navigation function provides to the user navigational information navigating the user from the current position of the mobile device (150) to the geographical position of the selected one of the points of interest.

5. The method of one of claims 1 to 4, wherein the method further comprises transmitting from the mobile device (150) to the remote LBS server (100) the current geographical position of the mobile device (150); and including in the location based services data points of interests having geographical positions within a defined distance from the current geographical position of the mobile device (150).

6. The method of one of claims 1 to 5, wherein the mobile device (150) communicates with the remote LBS server (100) via a mobile radio network; the Hypertext Transfer Protocol is used as the transfer protocol; Uniform Resource Locators are used as resource locators; and a Hypertext Transfer Protocol server is used as the local transfer protocol server (211).

7. A system for providing navigational information, the system comprising:
a mobile device (150) comprising a browser (160);
a remote computerized LBS server (100) configured to provide location based services to the browser (160) through a transfer protocol;
wherein the mobile device (150) further comprises a navigation server (210) including a local transfer protocol server (211) and navigation modules (214);
the LBS server (100) is further configured to transmit to the browser (160) location based services data including geographical positions of points of interest, navigation command codes, and at least one resource locator for accessing the local transfer protocol server (211) located in the mobile device (150), and web page definition code (200) enabling the browser (160) to receive from a user instructions for selecting a selected one of the points of interest and a selected one of the navigation command codes; and
the navigation modules (214) are configured to execute navigation functions in response to the resource locator received in the transfer protocol server (211) from the browser (160), a navigation function being defined by the selected one of the navigation command codes, received in the transfer protocol server (211) in connection with the resource locator, and providing to the user navigational information related to the geographical position of the selected one of the points of interest, received in the transfer protocol server (211) in connection with the resource locator.

8. The system of claim 7, wherein the location based services data includes navigation command resource locators, each navigation command resource locator being a resource locator associated with the local transfer protocol server (211) and at least one of a geographical position of a point of interest and a navigation command code; the web page definition code (200) enables the browser (160) to receive from the user instructions for selecting a selected one of the navigation command resource locators; and the navigation modules (214) are configured to execute navigation functions in response to the selected one of the navigation command resource locators received in the transfer protocol server (211) from the browser (160).

9. The system of claim 7, wherein the web page definition code (200) enables the browser (160) to generate a navigation command resource locator from the resource locator associated with the local transfer protocol server (211), the geographical position of the selected one of the points of interest and the selected one of the navigation command codes; and the navigation modules (214) are configured to execute navigation functions in response to the navigation command resource locator received in the transfer protocol server (211) from the browser (160).

10. The system of one of claims 7 to 9, wherein the navigation function provides to the user navigational information navigating the user from the current position of the mobile device (150) to the geographical position of the selected one of the points of interest.

11. The system of one of claims 7 to 10, wherein the navigation modules (214) are further configured to transmit to the remote LBS server (100) the current geographical position of the mobile device (150); and the remote LBS server (100) is further configured to include in the location based services data points of interests having geographical positions within a defined distance from the current geographical position of the mobile device (150).

12. The system of one of claims 7 to 11, wherein the mobile device (150) is configured to communicate with the remote LBS server (100) via a mobile radio network; the transfer protocol is the Hypertext Transfer Protocol; resource locators are Uniform Resource Locators; and the local transfer protocol server (211) is a Hypertext Transfer Protocol server.

13. A computer program product comprising computer program code means for controlling one or more processors of a LBS server (100) which provides location based services to browsers (160) of remote mobile devices (150) through a transfer protocol, such that the LBS server (100)
stores web page definition code (200) including geographical positions of points of interest, navigation command codes, and at least one resource locator for accessing a transfer protocol server (211) located in the mobile devices (150), the web page definition code (200) being configured to enable the browsers (160) of the remote mobile devices (150) to receive from a user instructions for selecting a selected one of the points of interest and a selected one of the navigation command codes;
receives requests for location based services from the browsers (160) of the remote mobile devices (150); and
transmits to the mobile devices (150), responsive to the requests, location based services data including the web page definition code (200) with at least one of the geographical positions of points of interest, at least one of the navigation command codes, and the resource locator for accessing the transfer protocol server (211) located in the mobile devices (150).

14. The computer program product of claim 13, comprising further computer program code means for controlling the processors of the LBS server (100), such that the LBS server (100) stores with the web page definition code (200) navigation command resource locators, each navigation command resource locator being a resource locator associated with the transfer protocol server (211) located in the mobile devices (150) and at least one of a geographical position of a point of interest and a navigation command code, the web page definition code (200) further enabling the browser (160) to receive from the user instructions for selecting a selected one of the navigation command resource locators; and transmits to the mobile devices (150) the web page definition code (200) with at least one of the navigation command resource locators.

15. The computer program product of claim 13, comprising further computer program code means for controlling the processors of the LBS server (100), such that the LBS server (100) stores and transmits web page definition code (200) further enabling the browser (160) to generate a navigation command resource locator from the resource locator associated with the transfer protocol server (211) located in the mobile devices (150), the geographical position of the selected one of the points of interest and the selected one of the navigation command codes.

16. The computer program product of one of the claims 13 to 15, comprising further computer program code means for controlling the processors of the LBS server (100), such that the LBS server (100) receives from the mobile devices (150) their current geographical positions; and transmits to the mobile devices (150) web page definition code (200) with points of interests having geographical positions within a defined distance from their respective current geographical positions.

17. A computer program product comprising computer program code means for controlling one or more processors of a mobile device (150), such that the mobile device (150)
implements a local transfer protocol server (211);
requests and receives location based services data through a transfer protocol from a remote computerized LBS server (100) which provides location based services, the location based services data including geographical positions of points of interest, navigation command codes, at least one resource locator for accessing the local transfer protocol server (211) located in the mobile device (150), and web page definition code (200) enabling a browser (160) of the mobile device (150) to receive from a user instructions for selecting a selected one of the points of interest and a selected one of the navigation command codes; and
executes navigation functions in response to the resource locator received in the transfer protocol server (211) from the browser (160), a navigation function being defined by the selected one of the navigation command codes, received in the transfer protocol server (211) in connection with the resource locator, and providing to the user navigational information related to the geographical position of the selected one of the points of interest, received in the transfer protocol server (211) in connection with the resource locator.

## Patentansprüche

1. Verfahren zum Bereitstellen von Navigationsinformationen für einen Benutzer eines Mobilgeräts (150), wobei das Verfahren die folgenden Schritte umfasst:
Verwenden eines Browsers (160) des Mobilgeräts (150), um durch ein Transferprotokoll auf einen entfernten computerisierten LBS-Server (100) zuzugreifen, der ortsbasierte Dienste bereitstellt;
Empfangen von Daten ortsbasierter Dienste in dem Browser (160) von dem LBS-Server (100), wobei die Daten ortsbasierter Dienste geografische Positionen von interessierenden Punkten, Navigationsbefehlscodes und mindestens einen mit einem lokalen Transferprotokollserver (211), der sich in dem Mobilgerät (150) befindet, assoziierten Resource Locator umfassen;
Empfangen von Anweisungen von dem Benutzer in dem Browser (160), einen gewählten der interessierenden Punkte und einen gewählten der Navigationsbefehlscodes zu bestimmen;
Zugreifen auf den lokalen Transferprotokollserver (211) von dem Browser (160) aus durch Verwenden des Resource Locator in Assoziation mit dem gewählten der interessierenden Punkte und dem gewählten der Navigationsbefehlscodes; und
Ausführen einer Navigationsfunktion in dem Mobilgerät (150) als Reaktion auf den in dem Transferprotokollserver (211) von dem Browser (160) empfangenen Resource Locator, wobei die Navigationsfunktion durch den gewählten der Navigationsbefehlscodes definiert wird, und Bereitstellen von Navigationsinformationen in Bezug auf die geografische Position des gewählten der interessierenden Punkte für den Benutzer.

2. Verfahren nach Anspruch 1, wobei die in dem Browser (160) empfangenen Daten ortsbasierter Dienste Folgendes umfassen: Resource Locators von Navigationsbefehlen, wobei jeder Resource Locator von Navigationsbefehlen ein Resource Locator ist, der mit dem lokalen Transferprotokollserver (211) und einer geografischen Position eines interessierenden Punkts und/oder einem Navigationsbefehlscode assoziiert ist; die Anweisungen von dem Benutzer zur Auswahl eines gewählten der Resource Locators von Navigationsbefehlen empfangen werden; und durch Verwendung des gewählten Resource Locator von Navigationsbefehlen auf den lokalen Transferprotokollserver (211) zugegriffen wird.

3. Verfahren nach Anspruch 1, wobei das Verfahren ferner Folgendes umfasst: Erzeugen eines Resource Locator von Navigationsbefehlen in dem Browser (160) aus dem mit dem lokalen Transferprotokollserver (211), der geografischen Position des gewählten der interessierenden Punkte und dem gewählten der Navigationsbefehlscodes assoziierten Resource Locator; und Zugreifen auf den lokalen Transferprotokollserver (211) durch Verwendung des Resource Locator von Navigationsbefehlen.

4. Verfahren nach einem der Ansprüche 1 bis 3, wobei die Navigationsfunktion dem Benutzer Navigationsinformationen bereitstellt, die den Benutzer von der aktuellen Position des Mobilgeräts (150) zu der geografischen Position des gewählten der interessierenden Punkte navigieren.

5. Verfahren nach einem der Ansprüche 1 bis 4, wobei das Verfahren ferner Folgendes umfasst: Senden der aktuellen geografischen Position des Mobilgeräts (150) von dem Mobilgerät (150) zu dem entfernten LBS-Server (100); und Aufnehmen von interessierenden Punkten, die geografische Positionen innerhalb einer definierten Distanz von der aktuellen geografischen Position des Mobilgeräts (150) aufweisen, in die Daten ortsbasierter Dienste.

6. Verfahren nach einem der Ansprüche 1 bis 5, wobei das Mobilgerät (150) über ein Mobilfunknetz mit dem entfernten LBS-Server (100) kommuniziert; das Hypertext Transfer Protocol als das Transferprotokoll verwendet wird, Uniform Resource Locators als Resource Locators verwendet werden; und ein Server des Hypertext Transfer Protocol als der lokale Transferprotokollserver (211) verwendet wird.

7. System zum Bereitstellen von Navigationsinformationen, wobei das System Folgendes umfasst:
ein Mobilgerät (150), das einen Browser (160) umfasst;
einen entfernten computerisierten LBS-Server (100), der dafür ausgelegt ist, dem Browser (160) durch ein Transferprotokoll ortsbasierter Dienste bereitzustellen;
wobei das Mobilgerät (150) ferner einen Navigationsserver (210) umfasst, der einen lokalen Transferprotokollserver (211) und Navigationsmodule (214) umfasst;
der LBS-Server (100) ferner dafür ausgelegt ist, Daten ortsbasierter Dienste zu dem Browser (160) zu senden, die geografische Positionen von interessierenden Punkten, Navigationsbefehlscodes und mindestens einen Resource Locator zum Zugriff auf den lokalen Transferprotokollserver (211), der sich in dem Mobilgerät (150) befindet, und Webseiten-Definitionscode (200) umfassen, der es dem Browser (160) ermöglicht, von einem Benutzer Anweisungen zur Auswahl eines gewählten der interessierenden Punkte und eines gewählten der Navigationsbefehlscodes zu empfangen; und
die Navigationsmodule (214) dafür ausgelegt sind, als Reaktion auf den in dem Transferprotokollserver (211) von dem Browser (160) empfangenen Resource Locator Navigationsfunktionen auszuführen, wobei eine Navigationsfunktion durch den gewählten der Navigationsbefehlscodes definiert wird, die in dem Transferprotokollserver (211) in Verbindung mit dem Resource Locator empfangen werden, und dem Benutzer Navigationsinformationen in Bezug auf die geografische Position des gewählten der interessierenden Punkte bereitzustellen, die in dem Transferprotokollserver (211) in Verbindung mit dem Resource Locator empfangen werden.

8. System nach Anspruch 7, wobei die Daten ortsbasierter Dienste Folgendes umfassen: Resource Locators von Navigationsbefehlen, wobei jeder Resource Locator von Navigationsbefehlen ein Resource Locator ist, der mit dem lokalen Transferprotokollserver (211) und einer geografischen Position eines interessierenden Punkts und/oder einem Navigationsbefehlscode assoziiert ist; der Webseiten-Definitionscode (200) dem Browser (160) ermöglicht, von dem Benutzer Anweisungen zum Auswählen eines gewählten der Resource Locators von Navigationsbefehlen zu empfangen; und die Navigationsmodule (214) dafür ausgelegt sind, als Reaktion auf den in dem Transferprotokollserver (211) von dem Browser (160) empfangenen gewählten der Resource Locators von Navigationsbefehlen Navigationsfunktionen auszuführen.

9. System nach Anspruch 7, wobei der Webseiten-Definitionscode (200) dem Browser (160) ermöglicht, einen Resource Locator von Navigationsbefehlen aus dem Resource Locator zu erzeugen, der mit dem lokalen Transferprotokollserver (211), der geografischen Position des gewählten der interessierenden Punkte und dem gewählten der Navigationsbefehlscodes assoziiert ist; und die Navigationsmodule (214) dafür ausgelegt sind, als Reaktion auf den in dem Transferprotokollserver (211) von dem Browser (160) empfangenen Resource Locator von Navigationsbefehlen Navigationsfunktionen auszuführen.

10. System nach einem der Ansprüche 7 bis 9, wobei die Navigationsfunktion dem Benutzer Navigationsinformationen bereitstellt, die den Benutzer von der aktuellen Position des Mobilgeräts (150) zu der geografischen Position des gewählten der interessierenden Punkte navigieren.

11. System nach einem der Ansprüche 7 bis 10, wobei die Navigationsmodule (214) ferner dafür ausgelegt sind, die aktuelle geografische Position des Mobilgeräts (150) zu dem entfernten LBS-Server (100) zu senden; und der entfernte LBS-Server (100) ferner dafür ausgelegt ist, in die Daten ortsbasierter Dienste interessierende Punkte aufzunehmen, die geografische Positionen innerhalb einer definierten Distanz von der aktuellen geografischen Position des Mobilgeräts (150) aufweisen.

12. System nach einem der Ansprüche 7 bis 11, wobei das Mobilgerät (150) dafür ausgelegt ist, über ein Mobilfunknetz mit dem entfernten LBS-Server (100) zu kommunizieren; das Transferprotokoll das Hypertext Transfer Protocol ist; Resource Locators Uniform Resource Locators sind; und der lokale Transferprotokollserver (211) ein Server des Hypertext Transfer Protocol ist.

13. Computerprogrammprodukt, das Computerprogrammcodemittel zum Steuern eines oder mehrerer Prozessoren eines LBS-Servers (100), der ortsbasierte Dienste für Browser (160) von entfernten Mobilgeräten (150) durch ein Transferprotokoll bereitstellt umfasst, derart, dass der LBS-Server (100)
Webseiten-Definitionscode (200) speichert, der geografische Positionen von interessierenden Punkten, Navigationsbefehlscodes und mindestens einen Resource Locator zum Zugriff auf einen in den Mobilgeräten (150) befindlichen Transferprotokollserver (211) umfasst, wobei der Webseiten-Definitionscode (200) dafür ausgelegt ist, den Browsern (160) der entfernten Mobilgeräte (150) zu ermöglichen, von einem Benutzer Anweisungen zum Auswählen eines gewählten der interessierenden Punkte und eines gewählten der Navigationsbefehlscodes zu empfangen;
Anforderungen von ortsbasierten Diensten von den Browsern (160) der entfernten Mobilgeräte (150) empfängt; und
als Reaktion auf die Anforderungen Daten ortsbasierter Dienste zu den Mobilgeräten (150) sendet, die den Webseiten-Definitionscode (200) mit mindestens einer der geografischen Positionen von interessierenden Punkten, mindestens einem der Navigationsbefehlscodes und dem Resource Locator zum Zugriff auf den in den Mobilgeräten (150) befindlichen Transferprotokollserver (211) umfassen.

14. Computerprogrammprodukt nach Anspruch 13, das ferner Computerprogrammcodemittel umfasst zum Steuern der Prozessoren des LBS-Servers (100) derart, dass der LBS-Server (100) mit dem Webseiten-Definitionscode (200) Resource Locators von Navigationsbefehlen speichert, wobei jeder Resource Locator von Navigationsbefehlen ein Resource Locator ist, der mit dem in den Mobilgeräten (150) befindlichen Transferprotokollserver (211) und einer geografischen Position eines interessierenden Punkts und/oder einem Navigationsbefehlscode assoziiert ist, wobei der Webseiten-Definitionscode (200) ferner dem Browser (160) ermöglicht, von dem Benutzer Anweisungen zum Auswählen eines gewählten der Resource Locators von Navigationsbefehlen zu empfangen; und den Webseiten-Definitionscode (200) mit mindestens einem der Resource Locators von Navigationsbefehlen zu den Mobilgeräten (150) sendet.

15. Computerprogrammprodukt nach Anspruch 13, das ferner Computerprogrammcodemittel umfasst zum Steuern der Prozessoren des LBS-Servers (100) derart, dass der LBS-Server (100) Webseiten-Definitionscode (200) speichert und sendet, der ferner dem Browser (160) ermöglicht, einen Resource Locator von Navigationsbefehlen aus dem Resource Locator zu erzeugen, der mit dem in den Mobilgeräten (150) befindlichen Transferprotokollserver (211), der geografischen Position des gewählten der interessierenden Punkte und dem gewählten der Navigationsbefehlscodes assoziiert ist.

16. Computerprogrammprodukt nach einem der Ansprüche 13 bis 15, das ferner Computerprogrammcodemittel zum Steuern der Prozessoren des LBS-Servers (100) derart umfasst, dass der LBS-Server (100) von den Mobilgeräten (150) ihre aktuellen geografischen Positionen empfängt; und zu den Mobilgeräten (150) Webseiten-Definitionscode (200) mit interessierenden Punkten, die geografische Positionen innerhalb einer definierten Distanz von ihren jeweiligen aktuellen geografischen Positionen aufweisen, sendet.

17. Computerprogrammprodukt, das Computerprogrammcodemittel umfasst zum Steuern eines oder mehrerer Prozessoren eines Mobilgeräts (150) derart, dass das Mobilgerät (150)
einen lokalen Transferprotokollserver (211) implementiert;
durch ein Transferprotokoll von einem entfernten computerisierten LBS-Server (100), der ortsbasierte Dienste bereitstellt, Daten ortsbasierter Dienste anfordert und empfängt, wobei die Daten ortsbasierter Dienste Folgendes umfassen: geografische Positionen von interessierenden Punkten, Navigationsbefehlscodes, mindestens einen Resource Locator zum Zugriff auf den lokalen Transferprotokollserver (211), der sich in dem Mobilgerät (150) befindet, und Webseiten-Definitionscode (200), der es einem Browser (160) des Mobilgeräts (150) ermöglicht, von einem Benutzer Anweisungen zum Auswählen eines gewählten der interessierenden Punkte und eines gewählten der Navigationsbefehlscodes zu empfangen; und
als Reaktion auf den in dem Transferprotokollserver (211) von dem Browser (160) empfangenen Resource Locator eine Navigationsfunktion ausführt, die durch den gewählten der Navigationsbefehlscodes definiert wird, der in dem Transferprotokollserver (211) in Verbindung mit dem Resource Locator empfangen wird, und dem Benutzer Navigationsinformationen in Bezug auf die geografische Position des gewählten der interessierenden Punkte bereitstellt, die in dem Transferprotokollserver (211) in Verbindung mit dem Resource Locator empfangen werden.

## Revendications

1. Procédé de fourniture d'informations de navigation à un utilisateur d'un dispositif mobile (150), le procédé consistant à :
utiliser un navigateur (160) du dispositif mobile (150) pour accéder par l'intermédiaire d'un protocole de transfert à un serveur LBS (Localisation Based Service) informatisé distant (100) qui fournit des services basés sur la position ;
recevoir dans le navigateur (160) des données de services basés sur la position en provenance du serveur LBS (100), les données de services basés sur la position comprenant des positions géographiques de points d'intérêt, des codes de commande de navigation et au moins une adresse de ressource associée à un serveur de protocole de transfert local (211) localisé dans le dispositif mobile (150) ;
recevoir dans le navigateur (160) des instructions provenant de l'utilisateur destinées à déterminer l'un des points d'intérêt qui a été sélectionné et l'un des codes de commande de navigation qui a été sélectionné ;
accéder au serveur de protocole de transfert local (211) depuis le navigateur (160) en utilisant l'adresse de ressource en association avec celui des points d'intérêt qui a été sélectionné et celui des codes de commande de navigation qui a été sélectionné ; et
exécuter une fonction de navigation dans le dispositif mobile (150) en réponse à l'adresse de ressource reçue par le serveur de protocole de transfert (211) en provenance du navigateur (160), la fonction de navigation étant définie par celui des codes de commande de navigation qui a été sélectionné et fournissant à l'utilisateur des informations de navigation liées à la position géographique de celui des points d'intérêt qui a été sélectionné.

2. Procédé selon la revendication 1, dans lequel les données de services basés sur la position reçues dans le navigateur (160) comprennent des adresses de ressources de commande de navigation, chaque adresse de ressource de commande de navigation étant une adresse de ressource associée au serveur de protocole de transfert local (211) et à une position géographique d'un point d'intérêt et/ou un code de commande de navigation ; les instructions sont reçues de l'utilisateur pour sélectionner l'une des adresses de ressources de commandes de navigation qui a été sélectionnée; et le serveur de protocole de transfert local (211) fait l'objet d'un accès par utilisation de l'adresse de ressource de commande de navigation.

3. Procédé selon la revendication 1, dans lequel le procédé consiste en outre à générer dans le navigateur (160) une adresse de ressource de commande de navigation à partir de l'adresse de ressource associée au serveur de protocole de transfert local (211), à la position géographique de celui des points d'intérêt qui a été sélectionné et à celui des codes de commande de navigation qui a été sélectionné ; et à accéder au serveur de protocole de transfert local (211) en utilisant l'adresse de ressource de commande de navigation.

4. Procédé selon l'une des revendications 1 à 3, dans lequel la fonction de navigation fournit à l'utilisateur des informations de navigation permettant à l'utilisateur de naviguer de la position actuelle du dispositif mobile (150) à la position géographique de celui des points d'intérêt qui a été sélectionné.

5. Procédé selon l'une des revendications 1 à 4, dans lequel le procédé consiste en outre à transmettre du dispositif mobile (150) au serveur LBS distant (100) la position géographique actuelle du dispositif mobile (150) ; et à inclure dans les données de services basés sur la position des points d'intérêt ayant des positions géographiques se situant à moins d'une distance définie de la position géographique actuelle du dispositif mobile (150).

6. Procédé selon l'une des revendications 1 à 5, dans lequel le dispositif mobile (150) communique avec le serveur LBS distant (100) par l'intermédiaire d'un réseau radio mobile ; le Protocole de Transfert Hypertexte est utilisé en tant que protocole de transfert ; des adresses universelles de ressources (URL) sont utilisées en tant qu'adresses de ressources ; et un serveur de Protocole de Transfert Hypertexte est utilisé en tant que serveur de protocole de transfert local (211).

7. Système de fourniture d'informations de navigation, le système comprenant :
un dispositif mobile (150) comprenant un navigateur (160) ;
un serveur LBS informatisé distant (100) configuré pour fournir au navigateur (160) des services basés sur la position par l'intermédiaire d'un protocole de transfert ;
dans lequel le dispositif mobile (150) comprend en outre un serveur de navigation (210) comprenant un serveur de protocole de transfert local (211) et des modules de navigation (214) ;
le serveur LBS (100) est en outre configuré pour transmettre au navigateur (160) des données de services basés sur la position comprenant des positions géographiques de points d'intérêt, des codes de commandes de navigation et au moins une adresse de ressource permettant d'accéder au serveur de protocole de transfert local (211) localisé dans le dispositif mobile (150), et un code de définition de page Web (200) permettant au navigateur (160) de recevoir d'un utilisateur des instructions destinées à sélectionner l'un des points d'intérêt qui a été sélectionné et l'un des codes de commandes de navigation qui a été sélectionné ; et
les modules de navigation (214) sont configurés pour exécuter des fonctions de navigation en réponse à l'adresse de ressource reçue par le serveur de protocole de transfert (211) en provenance du navigateur (160), une fonction de navigation étant définie par celui des codes de commandes de navigation qui a été sélectionné, reçu par le serveur de protocole de transfert (211) en relation avec l'adresse de ressource, et fournissant à l'utilisateur des informations de navigation liées à la position géographique de celui des points d'intérêt qui a été sélectionné, reçu par le serveur de protocole de transfert (211) en relation avec l'adresse de ressource.

8. Système selon la revendication 7, dans lequel les données de services basés sur la position comprennent des adresses de ressources de commandes de navigation, chaque adresse de ressource de commande de navigation étant une adresse de ressource associée au serveur de protocole de transfert local (211), et à une position géographique d'un point d'intérêt et/ou un code de commande de navigation ; le code de définition de page Web (200) permet au navigateur (160) de recevoir de l'utilisateur des instructions pour sélectionner l'une des adresses de ressources de commandes de navigation qui a été sélectionnée ; et les modules de navigation (214) sont configurés pour exécuter des fonctions de navigation en réponse à celle des adresses de ressources de commandes de navigation qui a été sélectionnée, reçue du navigateur (160) par le serveur de protocole de transfert local (211).

9. Système selon la revendication 7, dans lequel le code de définition de page Web (200) permet au navigateur (160) de générer une adresse de ressource de commande de navigation à partir de l'adresse de ressource associée au serveur de protocole de transfert local (211), à la position géographique de celui des points d'intérêt qui a été sélectionné et à celui des codes de commandes de navigation qui a été sélectionné ; et les modules de navigation (214) sont configurés pour exécuter des fonctions de navigation en réponse à l'adresse de ressource de commande de navigation reçue du navigateur (160) par le serveur de protocole de transfert (211).

10. Système selon l'une des revendications 7 à 9, dans lequel la fonction de navigation fournit à l'utilisateur des informations de navigation permettant à l'utilisateur de naviguer de la position actuelle du dispositif mobile (150) à la position géographique de celui des points d'intérêt qui a été sélectionné.

11. Système selon l'une des revendications 7 à 10, dans lequel les modules de navigation (214) sont en outre configurés pour transmettre au serveur LBS distant (100) la position géographique actuelle du dispositif mobile (150) ; et le serveur LBS distant (100) est en outre configuré pour inclure dans les données de services basés sur la position des points d'intérêt ayant des positions géographiques se situant à moins d'une distance définie de la position géographique actuelle du dispositif mobile (150).

12. Système selon l'une des revendications 7 à 11, dans lequel le dispositif mobile (150) est configuré pour communiquer avec le serveur LBS distant (100) par l'intermédiaire d'un réseau radio mobile ; le protocole de transfert est le Protocole de Transfert Hypertexte ; les adresses de ressources sont des adresses universelles de ressources (URL) ; et le serveur de protocole de transfert local (211) est le serveur de Protocole de Transfert Hypertexte.

13. Produit programme informatique comprenant un moyen de code de programme informatique pour commander un ou plusieurs processeurs d'un serveur LBS (100) qui fournit des services basés sur la position à des navigateurs (160) de dispositifs mobiles distants (150) par l'intermédiaire d'un protocole de transfert, de telle manière que le serveur LBS (100)
stocke un code de définition de page Web (200) comprenant des positions géographiques de points d'intérêt, des codes de commandes de navigation et au moins une adresse de ressource permettant d'accéder à un serveur de protocole de transfert (211) localisé dans les dispositifs mobiles (150), le code de définition de page Web (200) étant configuré pour permettre aux navigateurs (160) des dispositifs mobiles distants (150) de recevoir d'un utilisateur des instructions pour sélectionner l'un des points d'intérêt qui a été sélectionné et l'un des codes de commandes de navigation qui a été sélectionné ;
reçoit des demandes de services basés sur la position en provenance des navigateurs (160) des dispositifs mobiles distants (150) ; et
transmet aux dispositifs mobiles (150), en réponse aux demandes, des données de services basés sur la position comprenant le code de définition de page Web (200) avec au moins l'une des positions géographiques de points d'intérêt, au moins l'un des codes de commandes de navigation, et l'adresse de ressource permettant d'accéder au serveur de protocole de transfert (211) localisé dans les dispositifs mobiles (150).

14. Produit programme informatique selon la revendication 13, comprenant en outre un moyen de code de programme informatique pour commander les processeurs du serveur LBS (100) de telle manière que le serveur LBS (100) stocke des adresses de ressources de commandes de navigation avec le code de définition de page Web (200), chaque adresse de ressource de commande de navigation étant une adresse de ressource associée au serveur de protocole de transfert (211) localisé dans les dispositifs mobiles (150) et à une position géographique d'un point d'intérêt et/ou un code de commande de navigation, le code de définition de page Web (200) permettant en outre au navigateur (160) de recevoir de l'utilisateur des instructions destinées à sélectionner l'une des adresses de ressources de commande de navigation qui a été sélectionnée ; et transmette aux dispositifs mobiles (150) le code de définition de page Web (200) avec au moins l'une des adresses de ressources de commande de navigation.

15. Produit programme informatique selon la revendication 13, comprenant en outre un moyen de code de programme informatique pour commander les processeurs du serveur LBS (100) de telle manière que le serveur LBS (100) stocke et transmette un code de définition de page Web (200) permettant en outre au navigateur (160) de générer une adresse de ressource de commande de navigation à partir de l'adresse de ressource associée au serveur de protocole de transfert (211) localisé dans les dispositifs mobiles (150), à la position géographique de celui des points d'intérêt qui a été sélectionné et à celui des codes de commandes de navigation qui a été sélectionné.

16. Produit programme informatique selon l'une des revendications 13 à 15, comprenant en outre un moyen de code de programme informatique pour commander les processeurs du serveur LBS (100) de telle manière que le serveur LBS (100) reçoive des dispositifs mobiles (150) leur position géographique actuelle ; et transmette aux dispositifs mobiles (150) un code de définition de page Web (200) contenant des points d'intérêt ayant des positions géographiques se situant à moins d'une distance définie de leurs positions géographiques actuelles respectives.

17. Produit programme informatique comprenant un moyen de code de programme informatique pour commander un ou plusieurs processeurs d'un dispositif mobile (150), de telle manière que le dispositif mobile (150) mette en oeuvre un serveur de protocole de transfert local (211) ;
demande et reçoive des données de services basés sur la position par l'intermédiaire d'un protocole de transfert en provenance d'un serveur LBS informatisé distant (100) qui fournit des services basés sur la position, les données de services basés sur la position comprenant des positions géographiques de points d'intérêt, des codes de commandes de navigation, au moins une adresse de ressource pour accéder au serveur de protocole de transfert local (211) localisé dans le dispositif mobile (150), et un code de définition de page Web (200) permettant à un navigateur (160) du dispositif mobile (150) de recevoir d'un utilisateur des instructions permettant de sélectionner l'un des points d'intérêt qui a été sélectionné et l'un des codes de commandes de navigation qui a été sélectionné ; et
exécute des fonctions de navigation en réponse à l'adresse de ressource reçue par le serveur de protocole de transfert (211) en provenance du navigateur (160), une fonction de navigation étant définie par celui des codes de commandes de navigation qui a été sélectionné, reçu par le serveur de protocole de transfert (211), en relation avec l'adresse de ressource, et fournissant à l'utilisateur des informations de navigation liées à la position géographique de celui des points d'intérêt qui a été sélectionné, reçu par le serveur de protocole de transfert (211) en relation avec l'adresse de ressource.
